# EUROPEAN PATENT APPLICATION

(11) **EP 4 776 632 A1**
(43) Date of publication of application: **15.07.2026**
(21) Application number: 24862108.8
(22) Date of filing: 06.09.2024
(51) Int. Cl.: H04N 21/431

(54) **INFORMATION DISPLAY METHOD AND APPARATUS, STORAGE MEDIUM, AND ELECTRONIC DEVICE**

(30) Priority: 07.09.2023 CN 202311154295
(71) Applicant: BEIJING YOUZHUJU NETWORK TECHNOLOGY CO. LTD., Beijing 101299 (CN)
(72) Inventor: WANG, Li, Beijing 100028 (CN); DONG, Shihan, Beijing 100028 (CN); XIE, Zhiyao, Beijing 100028 (CN)
(74) Representative: Grünecker Patent- und Rechtsanwälte PartG mbB
(86) International application number: PCT/CN2024/117620
(87) International publication number: WO 2025/051270

(57) **Abstract**

A method, an apparatus, a storage medium and an electronic device for information display are provided. The method includes: (S110) displaying a live streaming room page corresponding to a first account, whereithe live streaming room page corresponding to the first account comprises a live video stream corresponding to the first account and a live video stream corresponding to at least one second account, and a connection relationship has been established between the first account and the at least one second account; and (S120) displaying, in response to a first trigger operation on a first information trigger object of the second account displayed in the live steaming room page corresponding to the first account, an information display page of the second account in the live streaming room page corresponding to the first account, the information display page of the second account comprising to-be-recommended objects corresponding to the second account. It achieves displaying to-be-recommended object corresponding to the second account in the live streaming room corresponding to the first account by the trigger operation, the information display process is simplified, and the information display performance in the live streaming process is improved.

## Description

This application claims priority to Chinese Patent Application No. 202311154295.3, filed on Sep. 7, 2023, entitled "METHOD, APPARATUS, STORAGE MEDIUM AND ELECTRONIC DEVICE FOR INFORMATION DISPLAY", which is hereby incorporated by reference in its entirety.

### FIELD

Embodiments of the present disclosure relate to information interaction technologies, and in particular, to a method, an apparatus, a storage medium, and an electronic device for information display.

### BACKGROUND

With the continuous development of live streaming technologies, a manner in which an item is displayed to a viewer through live streaming is increasingly accepted by users. In a live streaming scenario, two or more live streaming rooms are connected in a connection manner for interactive display. In a connection scenario, viewers simultaneously watch live content of two or more live streaming rooms.

However, in the connection scenario, a viewer client end can only view to-be-recommended object information of a first live streaming room page in a first live streaming room. In a case of viewing to-be-recommended object information of a second live streaming room connected to the first live streaming room, it is necessary to switch from the first live streaming room page to a second live streaming room page, then the to-be-recommended object information of the second live streaming room may be viewed. The operation is complex.

### SUMMARY

The disclosure provides a method, an apparatus, a storage medium, and an electronic device for information display, to simplify the information display process in a live streaming connection scene.

In a first aspect, an embodiment of the present disclosure provides an information display method, including:
displaying a live streaming room page corresponding to a first account, where the live streaming room page corresponding to the first account includes a live video stream corresponding to the first account and a live video stream corresponding to at least one second account, where a connection relationship has been established between the first account and the at least one second account; and
displaying, in response to a first trigger operation on a first information trigger object of the second account displayed in the live steaming room page corresponding to the first account, an information display page of the second account in the live streaming room page corresponding to the first account, the information display page of the second account comprising a to-be-recommended object corresponding to the second account.

In a second aspect, an embodiment of the present disclosure further provides an information display apparatus, including:
a live streaming room page display module for displaying a live streaming room page corresponding to a first account, where the live streaming room page corresponding to the first account comprises a live video stream corresponding to the first account and a live video stream corresponding to at least one second account, and a connection relationship has been established between the first account and the at least one second account; and
an information display module for displaying, in response to a first trigger operation on a first information trigger object of the second account displayed in the live steaming room page corresponding to the first account, an information display page of the second account in the live streaming room page corresponding to the first account, the information display page of the second account comprising a to-be-recommended object corresponding to the second account.

In a third aspect, an embodiment of the present disclosure further provides an electronic device, including: one or more processors;
a storage device for storing one or more programs;
when the one or more programs are executed by the one or more processors, causing the one or more processors to implement the information display method provided in embodiments of the present disclosure.

In a fourth aspect, an embodiment of the present disclosure further provides a storage medium including computer-executable instructions. The computer-executable instructions, when executed by a computer processor, performs the information display method provided in embodiments of the present disclosure.

### BRIEF DESCRIPTION OF DRAWINGS

The above and other features, advantages, and aspects of various embodiments of the present disclosure will become more apparent from the following detailed description taken in conjunction with the accompanying drawings. Throughout the drawings, the same or similar reference numerals refer to the same or similar elements. It should be understood that the drawings are schematic, and components and elements are not necessarily drawn to scale.
FIG. 1 is a schematic diagram of a live streaming application scenario according to an embodiment of the present disclosure;
FIG. 2 is a schematic diagram of a live streaming room page corresponding to a first account displayed by a viewer end according to an embodiment of the present disclosure;
FIG. 3 is a schematic flowchart of an information display method according to an embodiment of the present disclosure;
FIG. 4 is a schematic diagram of an information display process according to an embodiment of the present disclosure;
FIG. 5 is a schematic diagram of a display of at least local to-be-recommended object information according to an embodiment of the present disclosure;
FIG. 6 is a schematic diagram of a display of a to-be-recommended object list page according to an embodiment of the present disclosure;
FIG. 7 is a schematic diagram of information display according to an embodiment of the present disclosure;
FIG. 8 is a schematic diagram of information display according to an embodiment of the present disclosure;
FIG. 9 is a schematic diagram of information display according to an embodiment of the present disclosure;
FIG. 10 is a schematic diagram of information display according to an embodiment of the present disclosure;
FIG. 11 is a schematic diagram of a display of a to-be-recommended object list page according to an embodiment of the present disclosure;
FIG. 12 is a schematic diagram of a display of a to-be-recommended object list page according to an embodiment of the present disclosure;
FIG. 13 is a schematic diagram of an order page display according to an embodiment of the present disclosure;
FIG. 14 is a schematic diagram of a display of a detail display page according to an embodiment of the present disclosure;
FIG. 15 is a schematic structural diagram of an information display apparatus according to an embodiment of the present disclosure;
FIG. 16 is a schematic diagram of a structure of an electronic device according to an embodiment of the present disclosure.

### DETAILED DESCRIPTION

Embodiments of the present disclosure will be described in more detail below with reference to the accompanying drawings. While certain embodiments of the present disclosure are shown in the drawings, it is to be understood that the present disclosure may be implemented in various forms, without explaining as limited to the embodiments set forth herein, and conversely these embodiments are provided for a more thorough and complete understanding of the present disclosure. It should be understood that the drawings and embodiments of the present disclosure are for purposes of illustration only but not intended to limit the scope of the present disclosure.

It should be understood that the various steps recited in the method implementations of the present disclosure may be performed in different orders, and/or in parallel. Further, the method implementations may include additional steps and/or omit performing the illustrated steps. The scope of the present disclosure is not limited in this respect.

As used herein, the term "comprising" and variations thereof are open-ended, i.e., "including but not limited to". The term "based on" is "based at least in part on". The term "one embodiment" means "at least one embodiment"; the term "another embodiment" means "at least one other embodiment"; the term "some embodiments" means "at least some embodiments". The relevant definitions of other terms will be given below.

It should be noted that the concepts such as "first" and "second" mentioned in this disclosure are merely used to distinguish different apparatuses, modules, or units, but not intended to limit the order of functions performed by the apparatuses, modules, or units or the mutual dependency relationship.

It should be noted that the modification of "a" and "a plurality" mentioned in this disclosure is illustrative but not limiting, and those skilled in the art should understand that the modification of "a" and "a plurality" mentioned in this disclosure should be understood as "one or more" unless the context clearly indicates otherwise.

The names of messages or information exchanged between multiple apparatus in embodiments of the present disclosure are for illustrative purposes only but not intended to limit the scope of these messages or information.

It may be understood that, before the technical solutions disclosed in embodiments of the present disclosure are used, the types of personal information, the usage scope, the usage scenario and the like related to the present disclosure should be notified to the user in an appropriate manner according to the relevant laws and regulations and obtain the authorization of the user.

For example, in response to receiving an active request from a user, prompt information is sent to the user to explicitly prompt the user that the operation requested to be performed will need to acquire and use the personal information of the user. Therefore, the user may autonomously select, according to the prompt information, whether to provide personal information to software or hardware such as electronic devise, application programs, servers, or storage medium and the like that execute the operation of the technical solution of the present disclosure.

As an optional but non-limiting implementation, in response to receiving an active request from the user, the manner of sending the prompt information to the user may be, for example, a pop-up window, and the prompt information may be presented in a text manner in the pop-up window. In addition, the pop-up window may further carry a selection control for the user to select "agree" or "disagree" to provide personal information to the electronic device.

It is to be understood that the foregoing notification and obtaining a user authorization process is merely illustrative, and does not constitute a limitation on implementations of the present disclosure, and other manners of meeting related laws and regulations may also be applied to implementations of the present disclosure.

It may be understood that the data involved in the technical solution (including but not limited to the data itself, the acquisition or use of the data) should follow the requirements of the corresponding laws and regulations and related regulations.

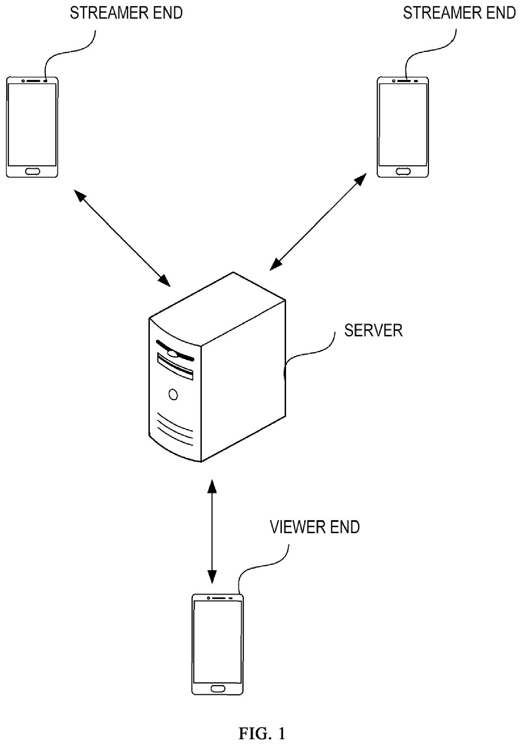

With reference to FIG. 1, FIG. 1 is a schematic diagram of a live streaming application scenario according to an embodiment of the present disclosure. A streamer end (for example, a terminal such as a mobile phone or a tablet computer) collects the live video stream, and may send the live video stream to the server, and the viewer end pulls the live video stream from the server for playing. The streamer end may be multiple, and in a case that the streamer end initiates a connection request, the server combines the live video streams of at least two accounts connected to each other to form a live streaming connection video stream. In a case that the viewer end requests any account in the connection scenario, the server pushes the live streaming connection video stream to the viewer end for display.

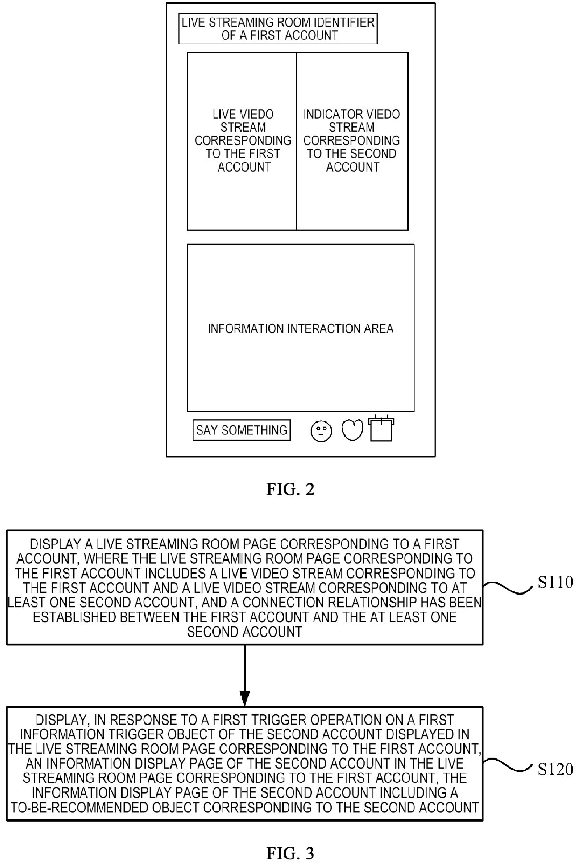

For example, referring to FIG. 2, FIG. 2 is a schematic diagram of the live streaming room page corresponding to the first account displayed by an viewer end according to an embodiment of the present disclosure. The live streaming connection image includes at least two video stream display areas for displaying the live streaming video stream. FIG. 2 includes two video stream display areas, which are only examples. In response to the number of connected accounts being greater than 2, video stream display areas of a plurality of connected accounts may be displayed. The live streaming room page corresponding to the first account further includes an information interaction area for displaying interaction information between the viewer end and the streamer end.

The viewer end requests live streaming room data corresponding to the first account, and displays the live streaming room page corresponding to the first account at the streamer end. The live streaming video stream corresponding to the first account and the live streaming video stream corresponding to the at least one second account are displayed in the live streaming room page corresponding to the first account, where the live streaming video stream corresponding to the first account is located at the first display position of the live streaming room page corresponding to the first account. Optionally, the live streaming room page corresponding to the first account includes a plurality of video stream display areas, and each video stream display area is configured to display a live streaming room video stream corresponding to an account, where the live streaming video stream corresponding to the first account is displayed in the first video stream display area, and the live video stream corresponding to the at least one second account is respectively displayed in other video stream display areas. Optionally, the first position video stream display area may be a top-left position of the live streaming room page corresponding to the first account, and the display area of the live streaming room video stream corresponding to the at least one second account may be sequentially set according to an access order or randomly set. When two first accounts and an second account shown in FIG. 2 are in a connection state, the video stream display area corresponding to the first account is set on the left side, and the video stream display area corresponding to the second account is set on the right side. The top position in FIG. 2 displays a live streaming room identifier corresponding to the first account, and the live streaming room identifier corresponding to the first account may be one or more of an avatar of the live streaming room corresponding to the first account, a name of the live streaming room corresponding to the first account, and the like.

An embodiment of the present disclosure provides an information display method, as shown in FIG. 3. FIG. 3 is a schematic flowchart of an information display method according to an embodiment of the present disclosure. Embodiments of the present disclosure are applicable to a scenario in which information of a to-be-recommended object of another account is displayed in a live streaming room page corresponding to a first account in a live streaming connection scenario. The method may be performed by an information display apparatus, and the apparatus may be implemented in a form of software and/or hardware, optionally, implemented by using an electronic device, and the electronic device may be a mobile terminal, a PC terminal, a server, or the like.

As shown in FIG. 3, the method includes the following.

S110, a live streaming room page corresponding to a first account is displayed, where the live streaming room page corresponding to the first account includes a live video stream corresponding to the first account and a live video stream corresponding to at least one second account, and a connection relationship has been established between the first account and the at least one second account.

S120, in response to a first trigger operation on a first information trigger object of the second account displayed in the live streaming room page corresponding to the first account, an information display page of the second account is displayed in a live streaming room page corresponding to the first account, the information display page of the second account including a to-be-recommended object corresponding to the second account.

In response to the live streaming room trigger operation, the live streaming room page corresponding to the first account is entered. When the first account and the at least one second account are in a live streaming connection scenario, that is, a connection relationship has been established between the first account and the at least one second account, the live streaming room page corresponding to the first account displays the live streaming connection image. The live streaming room trigger operation may be a sliding switching operation on a previous live streaming room page, or further may be a click operation on a live streaming room preview image corresponding to the first account in the live streaming preview interface, or further may be a click operation on a live streaming room identifier corresponding to the first account, and the like.

The live streaming room page corresponding to the first account includes the live video stream corresponding to the first account and the live video stream corresponding to the at least one second account, and the live video stream corresponding to the first account and the live video stream corresponding to the at least one second account are synchronously displayed.

Different to-be-recommended objects may be displayed in live video streams corresponding to different accounts, these to-be-recommended objects may be items displayed by a live video stream to the viewer end. The to-be-recommended objects are items recommended in a current secondary live streaming process, and the to-be-recommended objects may be divided into a to-be-recommended object already explained, a to-be-recommended object in explanation, and a to-be-recommended object unexplained according to the recommendation states. The to-be-recommended object may be a tangible item or an intangible service, where the tangible item includes, but is not limited to, clothing, food, and the like, and the intangible service includes but is not limited to a service commodity such as a video member or a photography, and types of the to-be-recommended object are not limited herein.

In this embodiment, the first information trigger object of the second account displayed in the live streaming room page corresponding to the first account includes, but is not limited to, a live streaming room identifier corresponding to the second account, a first item display control corresponding to the second account, and a video stream display area where the live video stream corresponding to the second account is located. The live streaming room identifier corresponding to the second account may include, but is not limited to, a live streaming room avatar corresponding to the second account, an streamer avatar corresponding to the second account, a live streaming room name corresponding to the second account, and the like. The live streaming room identifier corresponding to the second account may be displayed at any position in the video stream display area of the second account, for example, may be at an upper right corner or a lower right corner of the second account display area, or the like; or the live streaming room identifier corresponding to the second account may be displayed at any position in the live streaming room page corresponding to the first account, for example, above the video stream display area of the second account. The first item display control corresponding to the second account is configured to trigger display of the item display information, and the first item display control may be, for example, a shopping cart trigger control.

Correspondingly, the first trigger operation may be a trigger operation on the live streaming room identifier corresponding to the second account displayed in the live streaming room page corresponding to the first account, or may be a trigger operation on the first item display control corresponding to the second account displayed in the live streaming room page corresponding to the first account, or may be a trigger operation on the display area of the live streaming video stream corresponding to the second account displayed in the live streaming room page corresponding to the first account.

In response to detecting the first information trigger object of the second account displayed in the live streaming room page corresponding to the first account, the information display page of the second account is displayed in the live streaming room page corresponding to the first account, and the information display page is configured to display the associated display information of the second account. The information display page of the second account includes the to-be-recommended object corresponding to the second account. It should be understood that the to-be-recommended object corresponding to the second account displayed in the information display page of the second account may be at least part of all the to-be-recommended objects displayed by the second account in the current live video stream.

In this embodiment, the information display page of the second account displays the to-be-recommended object corresponding to the second account, by displaying one or more pieces of information of the to-be-recommended object of the second account as follows: an object picture of the to-be-recommended object and the attribute information of the to-be-recommended object, where the attribute information of the to-be-recommended object includes, but is not limited to, a title of the to-be-recommended object, a value of the to-be-recommended object, and the like.

Optionally, the information display page of the second account further includes description information of the second account, and the description information of the second account includes, but is not limited to, a name, an avatar, an attention degree of the live streaming room, streamer information, a live streaming time, and the like of the second account, which may be set according to information display requirement of the second account.

According to the technical solution provided by the present embodiment, in the scenario of live streaming connection by the first account and the second account, in the live streaming room page corresponding to the first account, by the first trigger operation of the first information trigger object of the second account displayed in the live streaming room page corresponding to the first account, the to-be-recommended object corresponding to the second account is displayed in the live streaming room page corresponding to the first account, the to-be-recommended object corresponding to the second account is displayed in the live streaming room corresponding to the first account through the trigger operation. It achieves viewing the to-be-recommended object of the second account by triggering the to-be-recommended object corresponding to the second account without the user switching from the live streaming room page corresponding to the first account to the live streaming room page corresponding to the second account. The information display process is simplified, and the information display performance in the live streaming process is improved.

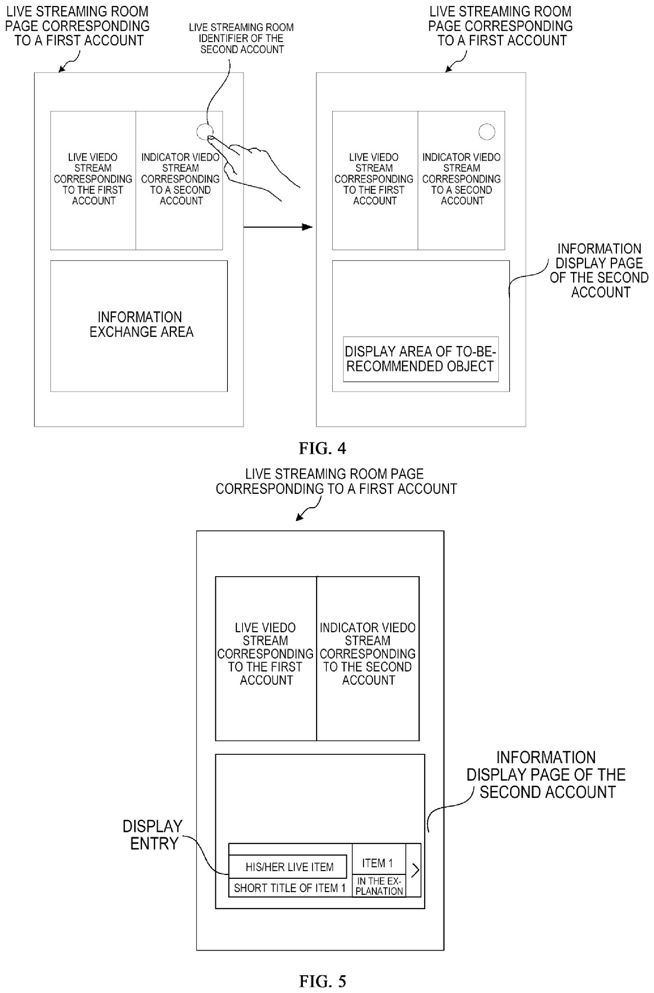

For example, referring to FIG. 4, FIG. 4 is a schematic diagram of an information display process according to an embodiment of the present disclosure. In FIG. 4, the upper right corner of the video stream display area corresponding to the second account displays the live streaming room identifier corresponding to the second account. When the user clicks the live streaming room identifier of the second account, the information display page of the second account is triggered and one or more to-be-recommended objects corresponding to the second account in the information display page of the second account are displayed. Optionally, the information display page of the second account may be set below the video stream display area, and the information display page of the second account does not overlap with the video stream display area, avoiding to shield the display area of the live streaming room in the display process of the display information. In some embodiments, the information display page of the second account may be set at an upper region of the information interaction area of the live streaming room page corresponding to the first account, as shown in FIG. 4.

The display mode of the to-be-recommended object corresponding to the second account may be: setting a plurality of display positions in the information display page of the second account, and respectively displaying, by using the plurality of display positions, the to-be-recommended object whose recommendation state corresponding to the second account is in explanation and the to-be-recommended object whose recommendation state corresponding to the second account is unexplained . The recommendation state of the to-be-recommended object may be determined according to a state setting operation on the to-be-recommended object by the streamer end. The recommendation state of the object to be recommended includes already explained, in explanation, and unexplained.

Optionally, the information display page of the second account includes the to-be-recommended object corresponding to the second account in a recommendation state being in explanation. Optionally, the information display page of the second account includes at least one to-be-recommended object corresponding to the second account in a recommendation state of being in explanation and at least one to-be-recommended object corresponding to the second account in a recommendation state of being un-explained.

In this embodiment, the to-be-recommended object in the recommendation state being of in explanation may be set with a preset differentiation identifier to distinguish from the to-be-recommended object in the recommendation state of being un-explained, where the preset differentiation identifier may be a graphic identifier, for example, a red dot or a five-pointed star graphic is set in the display position where the to-be-recommended object in the recommendation state being of in explanation is located. The preset distinguishing identifier may also distinguish the color identifiers, for example, setting the color of the display position where the object to be recommended is located different from colors of display positions of other objects to be recommended. The preset distinguishing identifier may also be a text identifier, and the text identifier may be "in explanation". In some embodiments, the display information of the to-be-recommended object in which the recommendation state is in un-explained includes an object picture, and a preset distinguishing identifier of "in explanation" is displayed on the to-be-recommended object picture that is in the recommendation state of being un-explained, and the "in explanation" identifier is marked as red.

It may be understood that, when the recommendation state corresponding to the second account is changed, that is, the explanation state of a next to-be-recommended object is set as in explanation, the preset differentiation identifier is switched to the display position where the next to-be-recommended object is located.

In some embodiments, the information display page of the second account includes a display entry of to-be-recommended objects corresponding to the second account and the to-be-recommended objects corresponding to the second account. The display entry of the to-be-recommended objects may be a link entry of the to-be-recommended objects, and the to-be-recommended object list page corresponding to the second account may be invoked by the link entry. By displaying the display entry of the to-be-recommended objects corresponding to the second account, the viewing entry of the to-be-recommended objects corresponding to the second account is provided to the user in the live streaming room page corresponding to the first account. That is, it achieves displaying the to-be-recommended objects corresponding to the second account in the live streaming room corresponding to the first account by clicking the display entry of the to-be-recommended objects corresponding to the second account without switching the live streaming room page.

At the same time, the information display page of the second account further displays at least part of the to-be-recommended objects corresponding to the second account, providing a preview for the user to facilitate the user to have preliminary cognition on the to-be-recommended objects corresponding to the second account when the display entry is not clicked, so that the user may learn about related information of the to-be-recommended objects corresponding to the second account by simplifying operation.

In an example, the information display page of the second account includes a display entry of to-be-recommended objects corresponding to the second account and to-be-recommended objects corresponding to the second account in the recommendation state of being in explanation. For example, referring to FIG. 5, FIG. 5 is a schematic diagram of displaying to-be-recommended objects according to an embodiment of the present disclosure. The display entry of the to-be-recommended objects corresponding to the second account in FIG. 5 is labeled as a live streaming room item of "HIS/HER". The display information of the to-be-recommended objects corresponding to the second account in the recommendation state of being in explanation includes a picture of a to-be-recommended object in the recommendation state of being in explanation, that is, an image of the item 1, and a preset differentiation identifier is set on the object picture of the to-be-recommended object in the recommendation state of being in explanation. The display information of the to-be-recommended object in the recommendation state of being in explanation further includes attribute information, and the attribute information may be a title or a short title of the to-be-recommended object in the recommendation state of being in explanation. A display range in the information display page of the second account is limited, and the position occupation may be reduced by displaying the short title. The short title may be extracted based on the title of the to-be-recommended object, obtained by extracting a preset number of keywords from the title of the to-be-recommended object, or obtained by performing short title extraction on the title of the to-be-recommended object through a preset short title generation model.

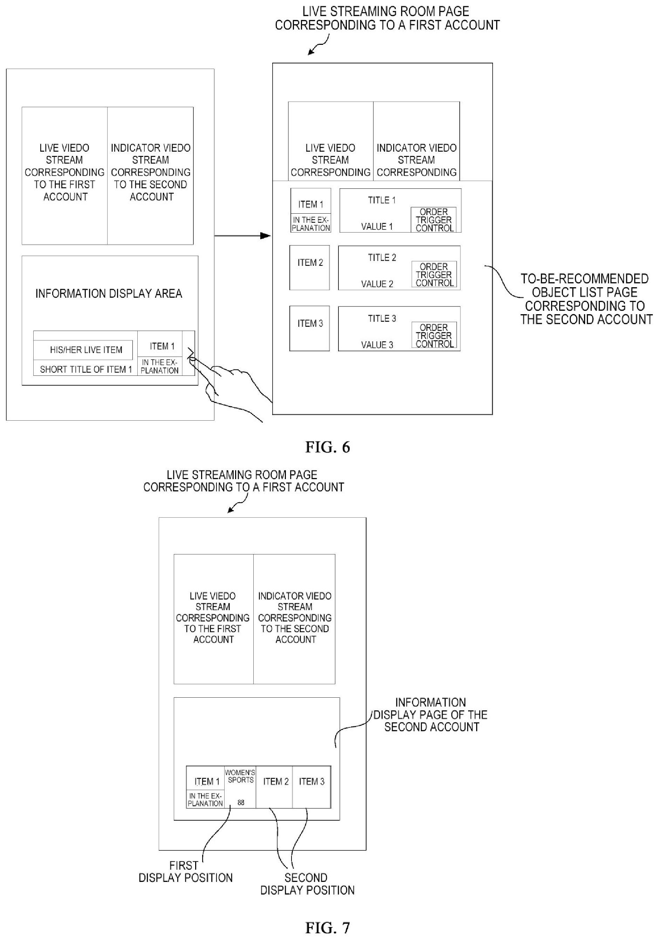

Based on the foregoing embodiment, in response to a second trigger operation on a second information trigger object displayed in the information display page of the second account, the to-be-recommended object list page corresponding to the second account is displayed in the live streaming room page corresponding to the first account. For example, referring to FIG. 6, FIG. 6 is a schematic diagram of a display of a to-be-recommended object list page according to an embodiment of the present disclosure. The second information trigger object may include but not limit to a display area of the to-be-recommended object corresponding to the second account, display information of the to-be-recommended object corresponding to the second account, a second item display control in the display area of the to-be-recommended object corresponding to the second account, a display entry of the to-be-recommended object corresponding to the second account. Correspondingly, the second trigger operation may be a click operation on the display entry of the to-be-recommended object corresponding to the second account, a click operation on any position in the display area of the to-be-recommended object corresponding to the second account, a click operation on the display information of the to-be-recommended object corresponding to the second account (for example, the display information of the to-be-recommended object may be an object picture), a trigger operation on a second item display control in the display area of the to-be-recommended object corresponding to the second account, the second item display control may be, for example, a control in the form of a clicked type arrow in FIG. 6. For example, the second item display control may further be a form of the number of to-be-recommended objects corresponding to the second account, for example, "N items >".

When the second trigger operation on the second information trigger object is detected, the to-be-recommended object list page is displayed, and the to-be-recommended object list page is displayed on an upper region of the live streaming room page corresponding to the first account. The to-be-recommended object list page may cover a part of the live streaming connection image. Optionally, the to-be-recommended object list page occupies a preset proportion of the live streaming room page corresponding to the first account, and the preset proportion may be 75% or 70%.

The to-be-recommended object list corresponding to the second account is displayed in the to-be-recommended object list page. The plurality of to-be-recommended objects corresponding to the second account in the to-be-recommended object list page may be ranked based on a preset sorting rule. For example, priority of the to-be-recommended object in the recommendation state of being in explanation is higher than priority of the to-be-recommended object in the recommendation state of being unexplained, and the priority of the to-be-recommended object in the recommendation state of being unexplained is higher than priority of the to-be-recommended object in the recommendation state of being already explained. For the plurality of to-be-recommended objects in the recommendation state of being unexplained, the to-be-recommended objects may be sorted according to an to-be explained order of the to-be-recommended objects, and the to-be-recommended objects in the recommendation state of being already explained may be sorted according to the explanation sequence. The to-be-recommended object in the recommendation state of being in explanation is displayed at the first display position in the to-be-recommended object list page. Each to-be-recommended object may correspond to an information display sub-area. An object picture, attribute information, and an order trigger control of the to-be-recommended object are displayed in the information display sub-area, where the attribute information may include, but is not limited to, a value or a title of the to-be-recommended object, as shown in the right diagram of FIG. 6.

Optionally, in response to a trigger operation on the order trigger control corresponding to any to-be-recommended object in the to-be-recommended object list page corresponding to the second account, an order page of the triggered to-be-recommended object is displayed in the live streaming room page corresponding to the first account.

It may be understood that, as the display area of the to-be-recommended object list page corresponding to the second account is limited, it is impossible for all to-be-recommended objects corresponding to the second account to be displayed in the to-be-recommended object list page corresponding to the second account, and the local to-be-recommended object is hidden. Correspondingly, in response to an upward sliding operation of the to-be-recommended object list page corresponding to the second account, information of the plurality of to-be-recommended objects of the second account is slidably displayed according to the sorting of the to-be-recommended objects.

In this embodiment, in the live streaming room page corresponding to the first account, by the trigger operation on the second information trigger object in the information display page of the second account, the to-be-recommended object list page corresponding to the second account is displayed such that the plurality of to-be-recommended objects corresponding to the second account may be queried in the live streaming room page corresponding to the first account, and the display process of to-be-recommended object information corresponding to the second account is simplified.

In some embodiments, the information display page of the second account includes a plurality of display positions, where a display position may be used to display one or more to-be-recommended objects. Information type and the number of the to-be-recommended objects that may be displayed in different display positions may be different, and the information type and the number may be determined according to an area size of the display position.

Optionally, the information display page of the second account includes a first display position and at least one second display position, the first display position displaying the to-be-recommended object corresponding to the second account in the recommendation state of being in explanation, the second display position displaying at least part of the to-be-recommended objects corresponding to the second account in the recommendation state of being unexplained. The sizes of the first display position and the second display position may be different. Optionally, the first display position includes an object picture and attribute information of the to-be-recommended object corresponding to the second account in the recommendation state of being in explanation. The second display position may display object pictures of one or more to-be-recommended objects in the recommendation state of being unexplained. By differentially displaying to-be-recommended object corresponding to the second account in the recommendation state of being in explanation by the first display position, the to-be-recommended object in the recommendation state of being in explanation is conveniently highlighted, and the user may more conveniently view related information of the to-be-recommended object in the recommendation state of being in explanation.

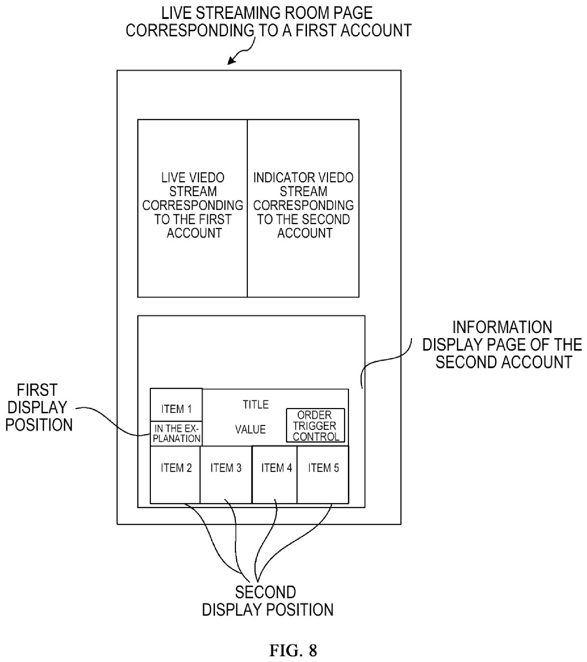

Optionally, there are a plurality of second display positions, and each second display position displays an object picture of a to-be-recommended object corresponding to the second account in the recommendation state of being unexplained. For example, referring to FIG. 7 and FIG. 8, FIG. 7 and FIG. 8 respectively are schematic diagrams of information display according to an embodiment of the present disclosure. The information display page of the second account in FIG. 6 includes a preset number of second display positions, and object pictures of the to-be-recommended objects in the recommendation state of being unexplained are displayed in the second display positions, the displaying may be determined according to the display order of the to-be-recommended objects in the recommendation state of being unexplained. By sequentially displaying display information of the plurality of to-be-recommended objects, the user is facilitated to preview the to-be-recommended objects to be explained.

In some embodiments, the first display position is located at the first position of the plurality of display positions. The arrangement of the first display position and the plurality of second display positions may be arranged from left to right, for example, in FIG. 7, where the first display position and the plurality of second display positions are sequentially arranged in a preset direction. The preset direction in FIG. 7 may be horizontal, correspondingly, among the plurality of horizontally arranged display positions, the first display position on the left side is the first position. Accordingly, the first display position is located on the left, and the plurality of second display positions are arranged in sequence on the right side of the first display position..

In some embodiments, the first display position is disposed in a first display area of the information display page of the second account. The at least one second display position is disposed in a second display area of the information display page of the second account and the display position of the first display area is adjacent to the display position of the second display area. The first display area and the second display area may be disposed vertically adjacent to each other, or may be disposed adjacent to each other at left and right. For example, a first display location of the first display position in FIG. 8 is located above a second display location of the second display position, which facilitates highlighting the to-be-recommended object in the first display position.

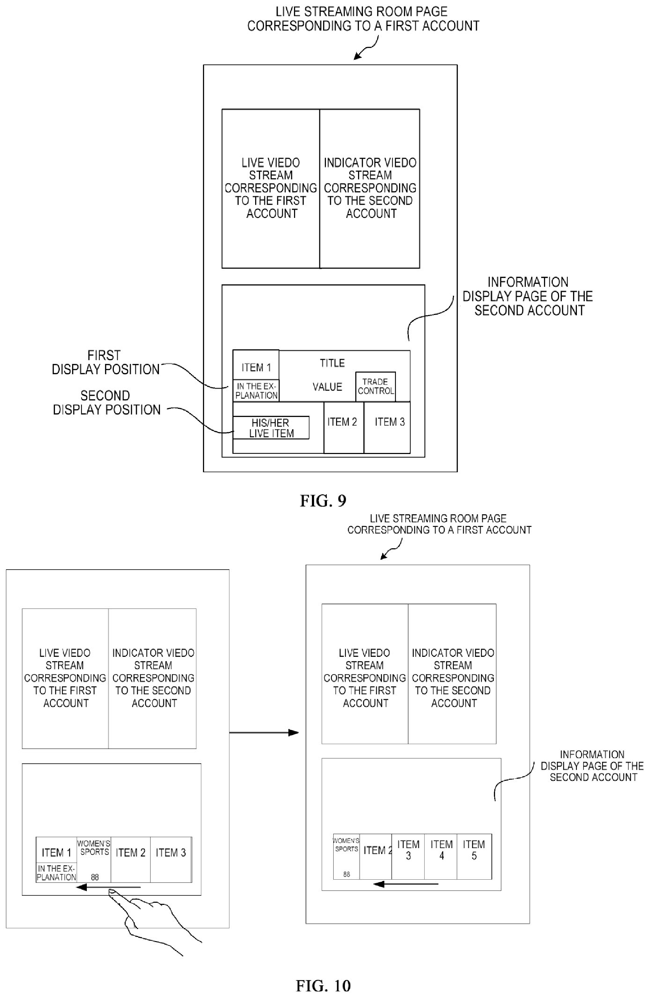

Optionally, the number of the second display position is one, and the second display position displays an object picture of at least part the to-be-recommended objects corresponding to the second account in the recommendation state being of unexplained. For example, referring to FIG. 9, FIG. 9 is a schematic diagram of information display according to an embodiment of the present disclosure. For example, the to-be-recommended objects in the recommendation state being of unexplained are screened, displaying the screened part of to-be-recommended objects in the recommendation state being of unexplained in the second display position. For example, it is also possible to display object pictures of the plurality of to-be-recommended objects in the recommendation state being of unexplained in the second display position in an overlapping manner. Optionally, the display area of one second display position and the display area of one first display position may be adjacently arranged up and down, or left and right. For example, the display area of the first display position is located above the display area of the second display position, or the display area of the first display position is located on the left side of the display area of the second display position.

On the basis of the foregoing embodiment, in a case that there are a plurality of second display positions, as an area size of the information display page of the second account is limited, it is unable for all to-be-recommended objects corresponding to the second account to be displayed by independent second display positions. When the to-be-recommended objects are displayed by the first display position and the plurality of second display positions, a part of the to-be-recommended objects corresponding to the second account may not be displayed in the information display page of the second account.

The plurality of second display positions (the first display position and the plurality of second display positions) are sequentially arranged in the display area in a preset direction, for example, arranged transversely (horizontal direction). Correspondingly, in response to a sliding operation in the display area in the information display page of the second account, the to-be-recommended objects in the recommendation state being of unexplained are displayed in a sliding manner in the information display page. The sliding operation may be a sliding operation in a preset direction, for example, a lateral sliding operation left and right. When the first display position and the plurality of second display positions are arranged in the horizontal direction, a sliding process may be performed on information of the to-be-recommended objects displayed in the first display position and the plurality of second display positions. For example, referring to FIG. 10, FIG. 10 is a schematic diagram of information display according to an embodiment of the present disclosure. Before the sliding operation is not performed, the plurality of display positions of the information display page of the second account display related information of Item 1, Item 2, and Item 3, and in response to a leftward sliding operation, the plurality of display positions are swiped left, and the related information of Item 4 and Item 5 that were previously hidden are displayed in the information display page of the second account.

In a case that the display area of the first display position and the display area of the plurality of second display positions are adjacently arranged, the plurality of second display positions are below the first display position, and the plurality of second display positions are arranged in the horizontal direction, as shown in FIG. 8. In response to a sliding operation on the display area of the plurality of second display positions, unexplained to-be-recommended objects in the display area of the second display positions are slidably displayed. Through the sliding operation, all to-be-recommended objects corresponding to the second account may be viewed without entering the to-be-recommended object list page, and the video stream playing of the connecting live streaming room is not affected.

Based on the foregoing embodiment, in response to a second trigger operation on the second information trigger object displayed in the information display page of the second account, the to-be-recommended object list page corresponding to the second account is displayed in the live streaming room page corresponding to the first account. The second information trigger object may be the first display position or any second display position.

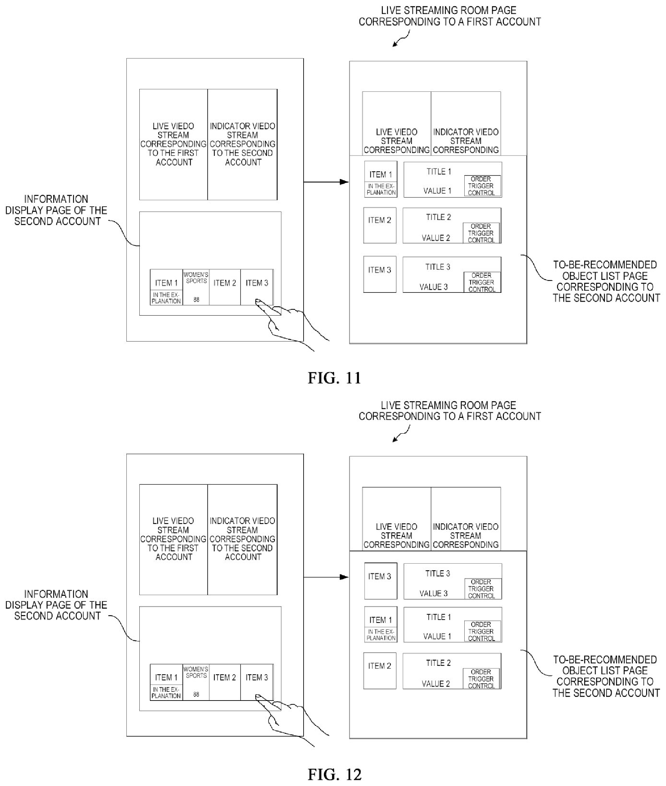

In some embodiments, the information display page of the second account further includes a second item display control. The second item display control may be a control in a form of an arrow and may be disposed in the second display position, above the second display position, or on a right side of the second display position. For example, referring to FIG. 11, FIG. 11 is a schematic diagram of a display of a to-be-recommended object list page according to an embodiment of the present disclosure.

In some embodiments, in response to a fourth trigger operation on the object picture of the to-be-recommended object corresponding to the second account, the to-be-recommended object list page corresponding to the second account is displayed in the live streaming room page corresponding to the first account, and the triggered to-be-recommended object is highlighted or set in the first display position to display in the to-be-recommended object list page corresponding to the second account.

When the information display page of the second account displays the plurality of to-be-recommended objects, the user may perform the fourth trigger operation on the object picture of the to-be-recommended object that is of interest according to the interest demand of the to-be-recommended object, where the fourth trigger operation may be a click operation of the object picture of the to-be-recommended object that is of interest. The to-be-recommended object list page corresponding to the second account is displayed, and the triggered to-be-recommended object is distinguishingly displayed in the to-be-recommended object list page corresponding to the second account to highlight the to-be-recommended object of interest to the user in the to-be-recommended object list page corresponding to the second account. The distinguishing display may be implemented by highlighting or setting to be displayed in the first display position.

For example, referring to FIG. 12, FIG. 12 is a schematic diagram of a display of a to-be-recommended object list page according to an embodiment of the present disclosure. In FIG. 12, in the fourth trigger operation of Item 3, Item 3 is set in the first display position for display in the to-be-recommended object list page corresponding to the second account. Correspondingly, other to-be-recommended objects are displayed in sequence based on the original display order.

It may be understood that the fourth trigger operation of the object picture of the to-be-recommended object may be different from the second trigger operation of the object picture of the to-be-recommended object, that is, the forms of the trigger operation may be different. It may be understood that by the click operation on the second item display control in the information display of the second account, or the click operation on the area out of the object picture of the to-be-recommended object in the information display of the second account, the to-be-recommended object list page may be displayed as shown in FIG. 11. The to-be-recommended object list page shown in FIG. 12 is displayed by a click operation of the object picture of the to-be-recommended object.

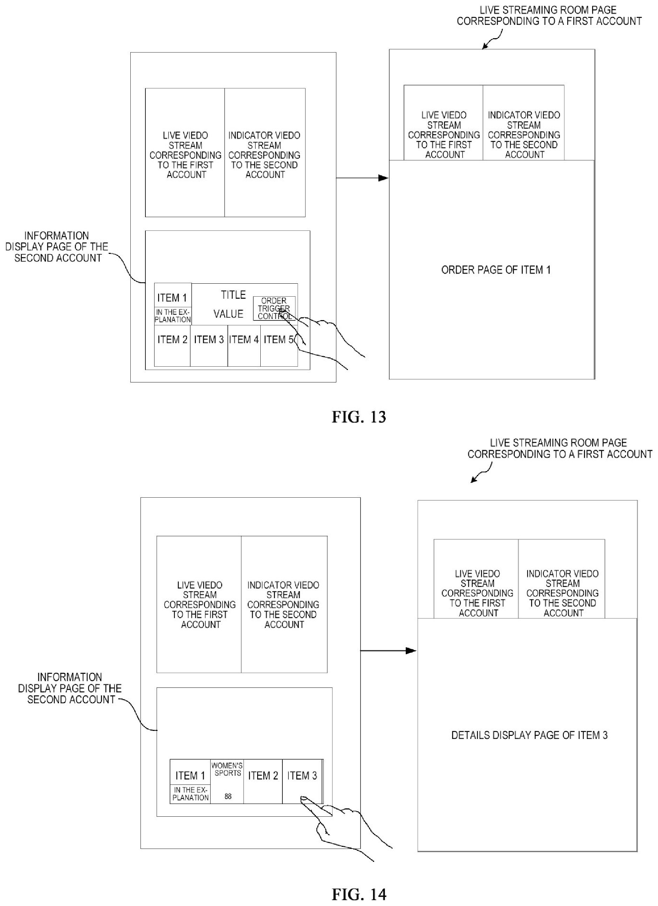

Based on the foregoing embodiment, the display position where the to-be-recommended object is located includes an order triggering control of the to-be-recommended object, and the order triggering control may trigger an ordering of the to-be-recommended object. The first display position may include an order trigger control of the to-be-recommended object corresponding to the second account in the recommendation state of being in explanation, and/or the second display position may include an order trigger control of the to-be-recommended object corresponding to the second account in the recommendation state of being unexplained. Correspondingly, in response to the trigger operation on the order trigger control, an order page of the to-be-recommended object corresponding to the second account is displayed in the live streaming room page corresponding to the first account. For example, referring to FIG. 13, FIG. 13 is a schematic diagram of an order page display according to an embodiment of the present disclosure. While the to-be-recommended object is displayed in the information display page of the second account, the order trigger control of the to-be-recommended object is displayed. In a case that the user knows the to-be-recommended object through the live streaming video stream of the second account, by triggering the order trigger control of the object to be recommended, an order placement operation for the object to-be-recommended corresponding to the second account may be realized with one click. This simplifies the order placement process and eliminates cumbersome page jumps and complex operations.

It may be understood that, such as the first display position shown in FIG. 7 may also include an order trigger control of the to-be-recommended object and may also trigger an ordering of the to-be-recommended object. The order trigger control of the to-be-recommended object is only shown in the first display position in FIG. 8 and FIG. 9 and the order trigger control of the to-be-recommended object may also be set in the second display position. The FIG. 8 and FIG. 9 are merely for an example.

It may be understood that the live streaming room page corresponding to the first account further includes an information display identifier corresponding to the first account, for example, a shopping cart identifier located at the bottom of the live streaming room page corresponding to the first account. In response to the trigger operation on the information display identifier corresponding to the first account, the information display page corresponding to the first account may be displayed to display the to-be-recommended object corresponding to the first account, so that the user may query the to-be-recommended object of the live streaming room corresponding to the first account.

Based on the foregoing embodiment, in response to a third trigger operation on the object picture of the to-be-recommended object corresponding to the second account, the triggered detail display page of the to-be-recommended object is displayed in the live streaming room page corresponding to the first account, where the third trigger operation may be a trigger operation on an object picture of any of the to-be-recommended objects displayed in the information display page of the second account and the third trigger operation may be a double-click operation of the object picture. When the third trigger operation on the object picture of the to-be-recommended object corresponding to the second account is detected, the detail display page of the triggered to-be-recommended object is displayed in the live streaming room page corresponding to the first account and the detail display page includes detailed information of the triggered to-be-recommended object. For example, referring to FIG. 14, FIG. 14 is a schematic diagram of display of a detail display page according to an embodiment of the present disclosure.

By the third trigger operation on the object picture of the to-be-recommended object corresponding to the second account in the live streaming room page corresponding to the first account, the triggered detail display page of the to-be-recommended object is displayed in one click, such that there is no need to jump the to-be-recommended object list page corresponding to the second account and enter the live streaming room page corresponding to the second account, thereby simplifying the display process of the detail display page.

According to an embodiment of the disclosure, in the scenario of live streaming connection by the first account and the second account, in the live streaming room page corresponding to the first account, by the first trigger operation of the first information trigger object of the second account displayed in the live streaming room page corresponding to the first account, the to-be-recommended object corresponding to the second account is displayed in the live streaming room page corresponding to the first account. It achieves viewing the to-be-recommended object of the second account in the live streaming room corresponding to the first account by a trigger operation without the user switching from the live streaming room page corresponding to the first account to the live streaming room page corresponding to the second account. The information display process is simplified and the information display performance in the live streaming process is improved.

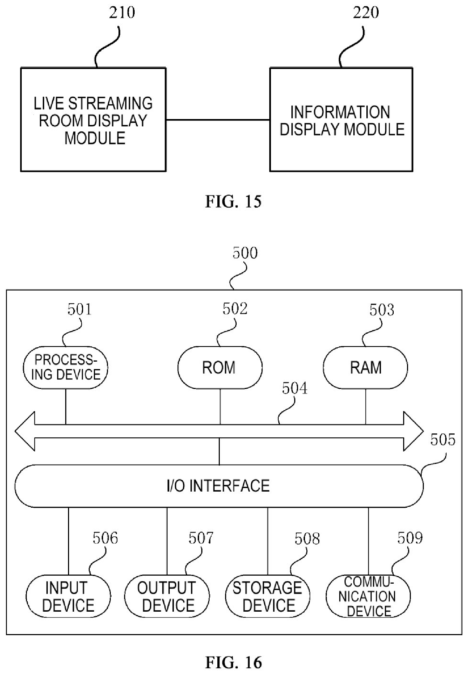

FIG. 15 is a schematic structural diagram of an information display apparatus according to an embodiment of the present disclosure. As shown in FIG. 15, the apparatus includes a live streaming room page display module 210 and an information display module 220.

The live streaming room page display module 210 is configured to display a live streaming room page corresponding to a first account, where the live streaming room page corresponding to the first account includes a live video stream corresponding to the first account and a live video stream corresponding to at least one second account and a connection relationship has been established between the first account and the at least one second account.

The information display module 220 is configured to display, in response to a first trigger operation on a first information trigger object of the second account displayed in a live streaming room page corresponding to the first account, an information display page of the second account in a live streaming room page corresponding to the first account, the information display page of the second account including a to-be-recommended objects corresponding to the second account.

According to the technical solution provided by embodiments of the present disclosure, in the scenario of live streaming connection by the first account and the second account, in the live streaming room page corresponding to the first account, by a first trigger operation of a first information trigger object of the second account displayed in the live streaming room page corresponding to the first account, the to-be-recommended object corresponding to the second account is displayed in the live streaming room page corresponding to the first account. It achieves viewing the to-be-recommended object of the second account in the live streaming room corresponding to the first account by a trigger operation without the user switching from the live streaming room page corresponding to the first account to the live streaming room page corresponding to the second account. The information display process is simplified and the information display performance in the live streaming process is improved.

Based on the foregoing embodiment, optionally, the information presentation page of the second account includes description information of the second account and the to-be-recommended objects corresponding to the second account.

The information display page of the second account includes a plurality of display positions and the plurality of display positions respectively display a to-be-recommended object corresponding to the second account in a recommendation state of being in explanation and a to-be-recommended object corresponding to the second account in a recommendation state of being unexplained.

Optionally, the plurality of display positions include a first display position and at least one second display position.

The first display position displays at least part of the to-be-recommended objects corresponding to the second account in the recommendation state of being unexplained, where the second display position includes an object picture of the to-be-recommended object in the recommendation state of being unexplained.

**The** at least one second display position diaplays at least part of the to-be-recommended objects corresponding to the second account in the recommendation state of being unexplained, where the second display position includes an object picture of the to-be-recommended object in the recommendation state of being unexplained.

Optionally, the first display position is located at the first position of the plurality of display positions; or
the first display position is disposed in a first display area of the information display page of the second account and the at least one second display position is disposed in a second display area of the information display page of the second account. The display position of the first display area is adjacent to the display position of the second display area.

Optionally, the plurality of second display positions are successively arranged in a preset direction in the display area.

The information display module 220 is further configured to: in response to a sliding operation in the display area in the information display page of the second account, slidingly display the to-be-recommended objects that are not displayed in the information display page.

On the basis of the foregoing embodiment, optionally, the display position where the to-be-recommended object is located includes an order trigger control of the to-be-recommended object.

The information display module 220 is further configured to display, in response to a trigger operation on the order trigger control, an order page of the to-be-recommended object corresponding to the second account in a live streaming room page corresponding to the first account.

Based on the foregoing embodiment, optionally, the information display module 220 is further configured to: display, in response to a second trigger operation on a second information trigger object displayed in the information display page of the second account, a to-be-recommended object list page corresponding to the second account in the live streaming room page corresponding to the first account.

Based on the foregoing embodiment, optionally, the information display module 220 is further configured to: display, in response to a third trigger operation on the object picture of the to-be-recommended object corresponding to the second account, a detail display page of the to-be-recommended object that is triggered in the live streaming room page corresponding to the first account.

Based on the foregoing embodiment, optionally, the information display module 220 is further configured to: display, in response to a fourth trigger operation on the object picture of the to-be-recommended object corresponding to the second account, a to-be-recommended object list page corresponding to the second account in the live streaming room page corresponding to the first account, and highlightingly or displaying in an initial display position the to-be-recommended object triggered in the to-be-recommended object list page corresponding to the second account.

The information display apparatus provided in the embodiments of the present disclosure may perform the information display method provided by any embodiment of the present disclosure and has functional modules and beneficial effects corresponding to the execution method.

It should be noted that the units and modules included in the foregoing apparatus are only divided according to the function logic, but are not limited to the foregoing division, as long as the corresponding functions can be implemented. In addition, the specific names of the functional units are merely for ease of distinguishing, but are not intended to limit the protection scope of the embodiments of the present disclosure.

FIG. 16 is a schematic structural diagram of an electronic device according to an embodiment of the present disclosure. Reference is now made to FIG. 16, which is a schematic structural diagram of an electronic device 500 (such as a terminal device or server in FIG. 16) suitable for implementing embodiments of the present disclosure. The terminal device in embodiments of the present disclosure may include, but is not limited to, a mobile terminal such as a mobile phone, a notebook computer, a digital broadcast receiver, a personal digital assistant (PDA), a tablet computer (PAD), a portable multimedia player (PMP), an in-vehicle terminal (for example, an in-vehicle navigation terminal), and a fixed terminal such as a digital TV, a desktop computer, or the like. The electronic device shown in FIG. 16 is merely an example, and should not impose any limitation on the functions and scope of use of the embodiments of the present disclosure.

As shown in FIG. 16, the electronic device 500 may include a processing device 501 (for example, a central processing processor, a graphics processor, etc.), which may perform various appropriate actions and processing according to a program stored in a read-only memory (ROM) 502 or a program loaded into a random access memory (RAM) 503 from a storage device 508. In the RAM 503, various programs and data required by the operation of the electronic device 500 are also stored. The processing device 501, the ROM 502, and the RAM 503 are connected to each other through a bus 504. An inpu/output (I/O) interface 505 is also connected to the bus 504.

Generally, the following devices may be connected to the I/O interface 505: an input device 506 including, for example, a touch screen, a touchpad, a keyboard, a mouse, a camera, a microphone, an accelerometer, a gyroscope, and the like; an output device 507 including, for example, a liquid crystal display (LCD), a speaker, a vibrator, and the like; the storage device 508 including, for example, a magnetic tape, a hard disk, and the like; and a communication device 509. The communication device 509 may allow the electronic device 500 to communicate wirelessly or wired with other devices to exchange data. While FIG. 16 shows an electronic device 500 having various devices, it should be understood that it is not required to implement or have all illustrated devices. More or fewer devices may alternatively be implemented or provided.

In particular, according to an embodiment of the present disclosure, the process described above with reference to the flowchart may be implemented as a computer software program. For example, embodiments of the present disclosure include a computer program product including a computer program embodied on a non-transitory computer readable medium, the computer program including program code for performing the method shown in the flowchart. In such embodiments, the computer program may be downloaded and installed from the network through the communication device 509, or installed from the storage device 508, or from the ROM 502. When the computer program is executed by the processing device 501, the foregoing functions defined in the method of embodiments of the present disclosure are performed.

The names of messages or information exchanged between multiple devices in embodiments of the present disclosure are for illustrative purposes only but are not intended to limit the scope of such messages or information.

The electronic device provided by embodiments of the present disclosure and the information display method provided in the foregoing embodiments belong to the same disclosure concept and technical details not described in detail in this embodiment may refer to the foregoing embodiments and this embodiment has the same beneficial effects as the foregoing embodiments.

An embodiment of the present disclosure provides a computer storage medium, where a computer program is stored. When the program is executed by a processor, the information display method provided in the foregoing embodiments is implemented.

It should be noted that the computer-readable medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, device, or element, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or element. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted with any suitable medium, including, but not limited to: wires, optical cables, radio frequency (RF), and the like, or any suitable combination of the foregoing.

In some implementations, the client, server may communicate using any currently known or future developed network protocol, such as Hyper Text Transfer Protocol (HTTP), and may be interconnected with any form or medium of digital data communication (e.g., communication network). Examples of communication networks include local area networks ("LANs"), wide area networks ("WANs"), internets (e.g., the Internet), and peer-to-peer networks (e.g., ad hoc peer-to-peer networks), as well as any currently known or future developed networks.

The computer-readable medium above may be included in the electronic device above; or may be separately present without being assembled into the electronic device.

The computer-readable medium above carries one or more programs, and when the one or more programs are executed by the electronic device, the electronic device is caused to.

The computer readable medium carries one or more programs, and when the one or more programs are executed by the electronic device, the electronic device is caused to: display the live streaming room page corresponding to a first account, where the live streaming room page corresponding to the first account includes the live video stream corresponding to the first account and the live video stream corresponding to at least one second account and a connection relationship has been established between the first account and the at least one second account; and in response to the first trigger operation on a first information trigger object of the second account displayed in a live streaming room page corresponding to the first account, display an information display page of the second account in a live streaming room page corresponding to the first account, the information display page of the second account including a to-be-recommended object corresponding to the second account.

Computer program code for performing the operations of the present disclosure may be written in one or more programming languages, including, but not limited to, object oriented programming languages such as Java, Smalltalk, C + +, and conventional procedural programming languages, such as the "C" language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (e.g., connected through the Internet using an Internet service provider).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, a program segment, or a portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware, where in some cases the names of the units do not constitute a limitation on the unit itself. For example, the first obtaining unit may be also described as "obtaining at least two units of Internet Protocol addresses".

The functions described above may be performed, at least in part, by one or more hardware logic components. For example, without limitation, example types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatus, or devices, or any suitable combination of the foregoing. More specific examples of machine-readable storage media may include electrical connections based on one or more wires, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

[In the Detailed Description section, all contents to be protected in the form of the claims are repeated as follows.]

According to one or more embodiments of the present disclosure, an information display method is provided [example 1], including:
displaying a live streaming room page corresponding to a first account, where the live streaming room page corresponding to the first account comprises a live video stream corresponding to the first account and a live video stream corresponding to at least one second account, and a connection relationship has been established between the first account and the at least one second account; and
displaying, in response to a first trigger operation on a first information trigger object of the second account displayed in the live steaming room page corresponding to the first account, an information display page of the second account in the live streaming room page corresponding to the first account, the information display page of the second account comprising to-be-recommended objects corresponding to the second account.

According to one or more embodiments of the present disclosure, there is provided an example information display method [example 2], further including:
the information display page of the second account includes description information of the second account and the to-be-recommended objects corresponding to the second account,
the information display page of the second account includes a plurality of display positions, and the plurality of display positions respectively display a to-be-recommended object corresponding to the second account in a recommendation state of being in explanation and a to-be-recommended object corresponding to the second account in a recommendation state of being unexplained.

According to one or more embodiments of the present disclosure, there is provided an example information display method [example 3], further including:
the plurality of display positions include a first display position and at least one second display position,
the first display position displays the to-be-recommended object corresponding to the second account in the recommendation state of being in explanation, where the first display position comprises an object picture and
attribute information of the to-be-recommended object corresponding to the second account in a recommendation state of being in explanation,
the at least one second display position diaplays at least part of the to-be-recommended objects corresponding to the second account in the recommendation state of being unexplained, where the second display position comprises an object picture of the to-be-recommended object in the recommendation state of being unexplained.

According to one or more embodiments of the present disclosure, there is provided an example information display method [example 4], further including:
the first display position is located at the first position of the plurality of display positions, or
the first display position is disposed in a first display area of the information display page of the second account, and the at least one second display position is disposed in a second display area of the information display page of the second account, a display position of the first display area being adjacent to a display position of the second display area.

According to one or more embodiments of the present disclosure, there is provided an example information display method [example 5], further including:
the plurality of second display positions are successively arranged in a preset direction in the display area,
the method further includes: slidingly displaying the to-be-recommended objects not displayed in the information display page in response to a sliding operation in the display area in the information display page of the second account.

According to one or more embodiments of the present disclosure, there is provided an example information display method [example 6], further including:
a display position in which the to-be-recommended object is located comprises an order trigger control of the to-be-recommended object,
the method further includes: displaying, in response to a trigger operation on the order trigger control, an order page of the to-be-recommended object corresponding to the second account in the live streaming room page corresponding to the first account.

According to one or more embodiments of the present disclosure, there is provided an example information display method [example 7], further including:
the method further includes: displaying, in response to a second trigger operation on a second information trigger object displayed in the information display page of the second account, a to-be-recommended object list page corresponding to the second account in the live streaming room page corresponding to the first account.

According to one or more embodiments of the present disclosure, there is provided an example information display method [example 8], further including:
the method further includes: displaying, in response to a third trigger operation on the object picture of the to-be-recommended object corresponding to the second account, a detail display page of the to-be-recommended object that is triggered in the live streaming room page corresponding to the first account, or
displaying, in response to a fourth trigger operation on the object picture of the to-be-recommended object corresponding to the second account, a to-be-recommended object list page corresponding to the second account in the live streaming room page corresponding to the first account, and highlightingly or displaying in an initial display position the to-be-recommended object triggered in the to-be-recommended object list page corresponding to the second account.

According to one or more embodiments of the present disclosure, there is provided an information display apparatus [example 9], including:
a live streaming room page display module configured to display a live streaming room page corresponding to the first account, where a live streaming room page corresponding to the first account includes a live video stream corresponding to the first account and a live video stream corresponding to at least one second account,
and a connection relationship has been established between the first account and the at least one second account; and
an information display module configured to display an information display page of the second account in the live streaming room page corresponding to the first account in response to a first trigger operation on the first information trigger object of the second account displayed in the live streaming room page corresponding to the first account, the information display page of the second account including the to-be-recommended object corresponding to the second account.

The above description is merely an illustration of the preferred embodiments of the present disclosure and the principles of the applied technology. It should be understood by those skilled in the art that the disclosure in the present disclosure is not limited to the technical solutions of the specific combination of the above technical features, and should also cover other technical solutions formed by any combination of the above technical features or their equivalent features without departing from the above disclosed concept. For example, the above features are the technical solutions formed by mutually replacing technical features disclosed in the present disclosure (but not limited to).

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and/or methodological acts, it is to be understood that the subject matter defined in the appended claims is not necessarily limited to the specific features or acts described above. Rather, the specific features and acts described above are merely example forms of implementing the claims.

## Claims

1. A method for information display, comprsing:
displaying a live streaming room page corresponding to a first account, wherein the live streaming room page corresponding to the first account comprises a live video stream corresponding to the first account and a live video stream corresponding to at least one second account, and a connection relationship has been established between the first account and the at least one second account; and
displaying, in response to a first trigger operation on a first information trigger object of the second account displayed in the live steaming room page corresponding to the first account, an information display page of the second account in the live streaming room page corresponding to the first account, the information display page of the second account comprising to-be-recommended objects corresponding to the second account.

2. The method of claim 1, wherein the information display page of the second account comprises description information of the second account and the to-be-recommended objects corresponding to the second account,
the information display page of the second account comprises a plurality of display positions, and the plurality of display positions respectively display a to-be-recommended object corresponding to the second account in a recommendation state of being in explanation and a to-be-recommended object corresponding to the second account in a recommendation state of being unexplained.

3. The method of claim 2, wherein the plurality of display positions comprise a first display position and at least one second display position,
the first display position displays the to-be-recommended object corresponding to the second account in the recommendation state of being in explanation, wherein the first display position comprises an object picture and attribute information of the to-be-recommended object corresponding to the second account in a recommendation state of being in explanation,
the at least one second display position diaplays at least part of the to-be-recommended objects corresponding to the second account in the recommendation state of being unexplained, wherein the second display position comprises an object picture of the to-be-recommended object in the recommendation state of being unexplained.

4. The method of claim 3, wherein the first display position is located at the first position of the plurality of display positions, or
the first display position is disposed in a first display area of the information display page of the second account, and the at least one second display position is disposed in a second display area of the information display page of the second account, a display position of the first display area being adjacent to a display position of the second display area.

5. The method of claim 3, wherein the plurality of second display positions are successively arranged in a preset direction in the display area,
the method further comprises: slidingly displaying the to-be-recommended objects not displayed in the information display page in response to a sliding operation in the display area in the information display page of the second account.

6. The method of any of claims 2-5, wherein a display position in which the to-be-recommended object is located comprises an order trigger control of the to-be-recommended object,
the method further comprises: displaying, in response to a trigger operation on the order trigger control, an order page of the to-be-recommended object corresponding to the second account in the live streaming room page corresponding to the first account.

7. The method of any of claims 1-5, further comprising:
displaying, in response to a second trigger operation on a second information trigger object displayed in the information display page of the second account, a to-be-recommended object list page corresponding to the second account in the live streaming room page corresponding to the first account.

8. The method of claim 3, further comprising:
displaying, in response to a third trigger operation on the object picture of the to-be-recommended object corresponding to the second account, a detail display page of the to-be-recommended object that is triggered in the live streaming room page corresponding to the first account, or
displaying, in response to a fourth trigger operation on the object picture of the to-be-recommended object corresponding to the second account, a to-be-recommended object list page corresponding to the second account in the live streaming room page corresponding to the first account, and highlightingly or displaying in an initial display position the to-be-recommended object triggered in the to-be-recommended object list page corresponding to the second account.

9. An apparatus for information display, comprising:
a live streaming room page display module for displaying a live streaming room page corresponding to a first account, wherein the live streaming room page corresponding to the first account comprises a live video stream corresponding to the first account and a live video stream corresponding to at least one second account, and a connection relationship has been established between the first account and the at least one second account; and
an information display module for displaying, in response to a first trigger operation on a first information trigger object of the second account displayed in the live steaming room page corresponding to the first account, an information display page of the second account in the live streaming room page corresponding to the first account, the information display page of the second account comprising a to-be-recommended object corresponding to the second account.

10. An electronic device, comprising:
one or more processors; and
a storage device for storing one or more programs;
when the one or more programs are executed by the one or more processors, causing the one or more processors to implement the method for information display of any of claims 1 to 8.

11. A storage medium comprising computer-executable instructions, the computer-executable instructions, when executed by a computer processor, performing the method for information display of any of claims 1 to 8.
